# EUROPEAN PATENT APPLICATION

(11) **EP 0 854 527 A2**
(43) Date of publication of application: **22.07.1998**
(21) Application number: 98100732.1
(22) Date of filing: 16.01.1998
(51) Int. Cl.: H01M 6/18

(54) **Lithium ion-conductive polymer electrolyte and lithium ion battery**

(30) Priority: 21.01.1997 JP 9003/97
(71) Applicant: NITTO DENKO CORPORATION, Osaka (JP)
(72) Inventor: Omata, Tetsuo, Ibaraki-shi, Osaka (JP); Kojima, Makoto, Ibaraki-shi, Osaka (JP)
(74) Representative: Grünecker, Kinkeldey, Stockmair & Schwanhäusser Anwaltssozietät

(57) **Abstract**

A lithium ion-conductive polymer electrolyte, comprising an acrylate, methacrylate, vinyl-ether or allyl-ether thermoplastic polymer containing a crown ether bonded to its side chain through a spacer, and a lithium salt as an electrolyte contained therein. The polymer electrolyte is solid at room temperature, can be formed into a film or the like and exhibits a good lithium ionic conductivity.

## Description

### FIELD OF THE INVENTION

The present invention relates to a lithium ion-conductive polymer electrolyte and a lithium ion battery comprising such a lithium ion-conductive polymer electrolyte.

### BACKGROUND OF THE INVENTION

Attempts have been made to use as a lithium ion-conductive solid electrolyte a flexible polymer electrolyte which can be easily formed into a film. This polymer electrolyte is composed of a composite of an organic polymer for dissolving a lithium salt therein and a lithium salt. The application of such a composite to a lithium ion battery which must have a small thickness or size can help enhance the battery capacity, prevent electrolyte leakage which could occur with the conventional liquid electrolyte batteries, improve the workability during battery production and reduce the production cost. The foregoing polymer electrolyte is considered useful as electrolyte for electrochromic display, lithium ion concentration sensor, lithium ion separating membrane, etc.

As the organic polymer constituting such a polymer electrolyte there have been heretofore proposed various organic polymers containing as a repeating unit a lithium ion complex or coordinated site such as polyethylene oxide, polyethyleneimine, polyethylene succinate and crosslinked triol polyethylene oxide.

However, the foregoing conventional polymer electrolyte made of a composite of an organic polymer and a lithium salt, if it comprises an acrylic or vinyl ether polymer containing as a repeating unit a polyethylene oxide in its side chain, exhibits an ionic conductivity at 25°C as low as 1 x 10⁻⁸ to 1 x 10⁻³ S/cm and thus is disadvantageous in that it cannot exhibit sufficiently satisfactory properties when applied to lithium ion batteries or used for the foregoing purposes.

### SUMMARY OF THE INVENTION

It is therefore an object of the present invention to provide a polymer electrolyte which comprises a polymer different from the conventional organic polymer as an organic polymer constituting the polymer electrolyte, and thus is solid at room temperature, can be formed into a film and exhibits a good lithium ion conductivity.

The above object of the present invention will become more apparent from the following detailed description and examples.

In order to accomplish the above object of the present invention, the inventors made a study of the selective conduction of lithium ion by containing a crown ether as a terminal functional group for carrier of lithium cation at a side chain, which bonds to a polymer main chain through a spacer.

In such a crown ether, ether oxygen atoms or thioether sulfur atoms contained in the molecular skeleton are in close vicinity to the radial range of lithium ion. Therefore, the crown ether can selectively include lithium ion. In particular, containing as a lithium ion carrier, a crown ether introduced at a side chain and having from 4 to 6 ether oxygen atoms or thioether sulfur atoms can possibly provide a polymer electrolyte having a high lithium transference number.

Further, requirements for electrolyte of lithium ion battery, such as heat resistance, film strength and low temperature characteristics, can be arbitrarily adjusted by copolymerizing an acrylic, methacrylic, vinyl ether or allyl ether monomer, which contains the crown ether as the lithium ion carrier, with other monomers such as acrylonitrile, acrylic long-chain alkyl ester, methacrylic long-chain alkyl ester, alkyl vinyl ether or alkyl allyl ether.

The inventors made further studies on the basis of these knowledges. In some detail, a specific organic polymer made of, e.g., the above copolymer having introduced therein a crown ether in its side chain through a spacer formed into a film which was then used as a polymer electrolyte for lithium ion battery. The polymer electrolyte was then evaluated for properties. As a result, it was found that such a polymer electrolyte exhibits a conductivity as high as from 1 x 10⁻⁴ to 5 x 10⁻³ S/cm. Thus, the present invention has been completed based on this finding.

The present invention provides a lithium ion-conductive polymer electrolyte, comprising an acrylate, methacrylate, vinyl ether or allyl ether thermoplastic polymer containing a crown ether at its side chain terminals through a spacer, and a lithium salt contained therein as an electrolyte.

The present invention also provides a lithium ion battery comprising such a lithium ion-conductive polymer electrolyte used as a separator interposed between positive electrode and negative electrode or as a material constituting the positive electrode.

### BRIEF DESCRIPTION OF THE DRAWING

By way of example and to make the description more clear, reference is made to the accompanying drawing in which:

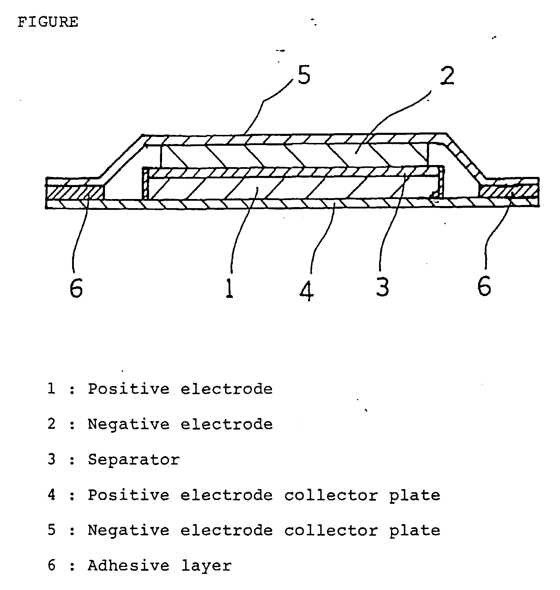

Fig. 1 is a sectional view showing an embodiment of a thin lithium ion battery comprising a lithium ion-conductive polymer electrolyte according to the present invention, wherein the reference numeral 1 indicates a positive electrode, the reference numeral 2 indicates a negative electrode, the reference numeral 3 indicates a separator, the reference numeral 4 indicates a positive electrode collector plate, the reference numeral 5 indicates a negative electrode collector plate, and the reference numeral 6 indicates an adhesive layer.

### DETAILED DESCRIPTION OF THE INVENTION

The thermoplastic polymer used in the present invention is one selected from the group consisting of acrylic, methacrylic, vinyl ether and allyl ether polymers, which are flexible even at temperatures of 0°C or less and contains a crown ether in its side chain terminal through a spacer to give a lithium ion inclusion structure, from the standpoint of mechanical strength, temperature characteristics and electrical characteristics of the film formed therefrom. Examples of the spacer used in the present invention include alkylene group, and (poly)alkylene oxide group.

Such a thermoplastic polymer which is generally used is a homopolymer or copolymer of an acrylate, methacrylate, vinyl ether or allyl ether monomer containing a crown ether bonded to its ester or ether moiety through an alkylene group or (poly)alkylene oxide group, as a main monomer, or a copolymer of the foregoing main monomer and other monomers such as acrylonitrile, acrylic acid esters, methacrylic acid esters, vinyl ethers and allyl ethers. Such a homopolymer or copolymer can be obtained in accordance with any conventional polymerization method.

Examples of the main monomer include (meth)acrylate monomers represented by the following formulae (1) and (2), and vinyl (or allyl) etheric monomers represented by the following formulae (3) and (4). In these formulae, A represents a C₁₋₂₀ alkylene group or (poly)alkylene oxide group constituting the spacer, such as (poly)ethylene oxide, (poly)propylene oxide and mixture thereof, and CROWN represents a crown ether.

CH₂ = CH - COO - A - CROWN (1)

CH₂ = C (CH₃) - COO - A - CROWN (2)

CH₂ = CH - O - A - CROWN (3)

CH₂ = CH - CH₂ - O - A - CROWN (4)

Specific examples of the main monomer used in the present invention include (meth)acrylate monomer terminated by a crown ether in its ester moiety such as alkyl (meth)acrylate, polyethylene glycol (meth)acrylate, polypropylene glycol (meth)acrylate and polyethylene glycol polypropylene glycol (meth)acrylate, vinyl ether monomer terminated by a crown ether in its ether moiety such as alkyl vinyl ether, vinylated polyethylene glycol, vinylated polypropylene glycol and vinylated polyethylene polypropylene glycol, and allyl ether monomer terminated by a crown ether in its ether moiety such as alkyl allyl ether, allylated polyethylene glycol, allylated polypropylene glycol and allylated polyethylene polypropylene glycol.

The crown ether used in the present invention is not specifically limited so far as it is a compound which can include lithium ion and be dissolved in a non-aqueous solvent. In practice, however, a compound comprising an ether oxygen- or thioether sulfur-containing basic skeleton containing 4 to 6 atoms having a substituent capable of chemically bonding to a spacer made of alkylene group or (poly)alkylene oxide group, such as hydroxyl group, amino group, carboxyl group, mercapto group, hydroxymethylene group, aminomethylene group, carboxymethylene group, mercaptomethylene group and other functional groups, incorporated in its molecule, is particularly desirable.

Some of these crown ethers have chemical structures represented by the following formulae (C1) to (C11). Representative among these crown ethers are those comprising 12-crown-4 (or benzo or dibenzo derivative thereof), 15-crown-5 (or benzo or dibenzo derivative thereof), 18-crown-6 (or benzo or bibenzo derivative thereof), cyclic hexamethylhexaanisole derivative or thioether derivative thereof as a basic skeleton and a substituent capable of chemically bonding to a spacer (X group).

In the following formulae (C1) to (C11), X represents -OH, -NH₂, -COOH, -SH, -(CH₂)ₘOH, -(CH₂)ₘNH₂, -(CH₂)ₘCOOH or -(CH₂)ₘSH (in which m represents an integer of from 0 to 3). Y represents O, S or combination thereof. Z represents a hydrogen atom, C₁₋₆ alkyl group, -OCH₃ or -OCH₂CH₂OCH₃.

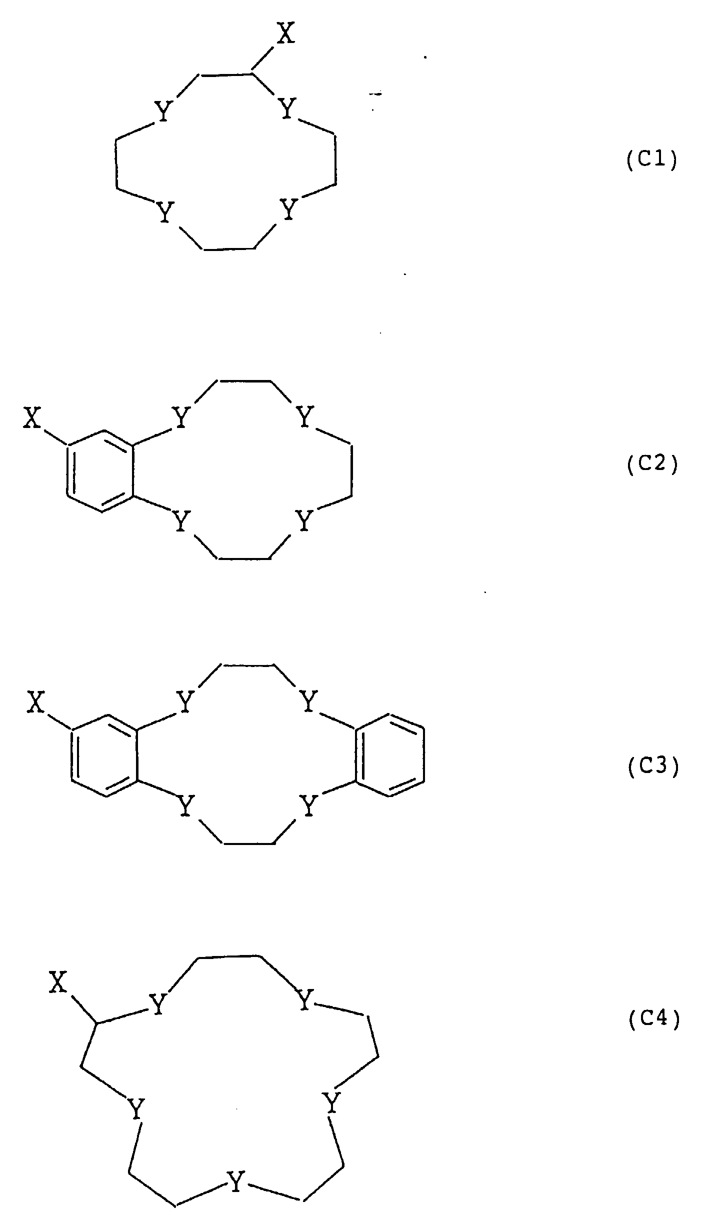

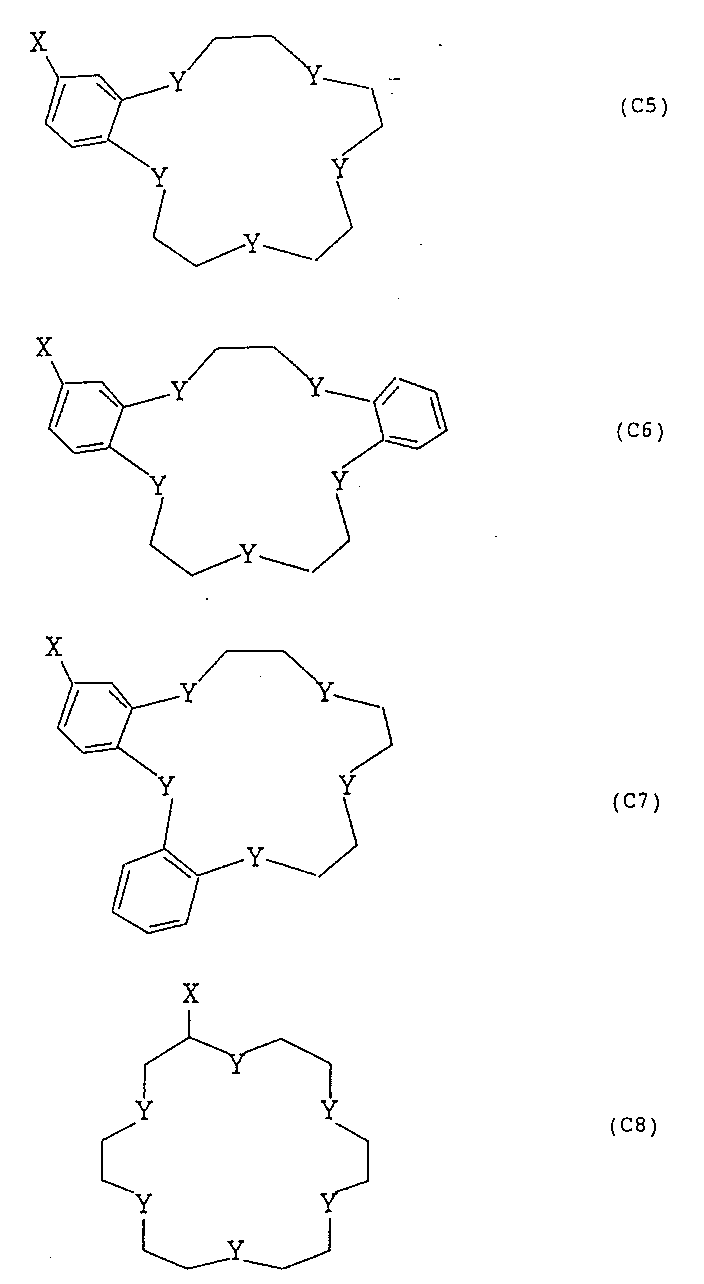

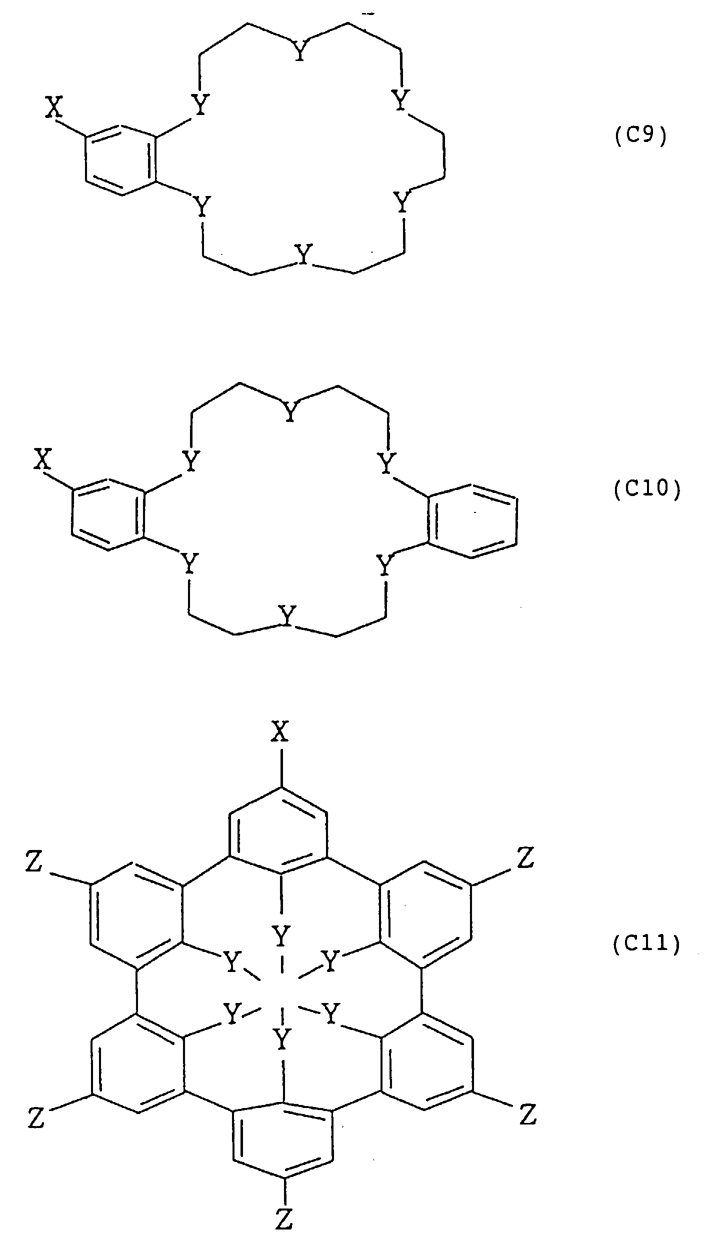

Examples of the other monomers copolymerizable with the main monomer include acrylonitrile, (meth)acrylic acid esters, such as polyethylene glycol monomethyl ether (meth)acrylate, polypropylene glycol monomethyl ether (meth)acrylate, or polyethylene glycol polypropylene glycol monomethyl ether (meth)acrylate and alkyl (meth)acrylate thereof, vinyl ethers, such as vinylated polyethylene glycol monomethyl ether, vinylated polypropylene glycol monomethyl ether, vinylated polyethylene polypropylene glycol monomethyl ether and alkyl vinyl ether thereof, and allyl ethers, such as allylated polyethylene glycol monomethyl ether, allylated polypropylene glycol monomethyl ether, allylated polyethylene polypropylene glycol monomethyl ether and alkyl allyl ether thereof.

The other monomers copolymerizable with the main monomer are optionally used to adjust the mechanical strength, temperature characteristics (e.g., Tg) and electrical characteristics (e.g., dielectric constant) of the polymer. The amount of the other monomers to be used is such that the amount of the main monomer is 5% by weight or more, preferably 20% by weight or more, and more preferably 50% by weight or more. Within this range, the optimum value is determined such that the desired electrical characteristics of the polymer are secured and well balanced with temperature characteristics such as Tg to provide good low temperature electrical characteristics or the like. The kind of the other monomers, e.g., length of side chain thereof, is preferably selected together with the optimum value.

The lithium salt used in the present invention can be any of those used in conventional polymer electrolytes. Examples of such a lithium salt include lithium bromide, lithium iodide, lithium thiocyanate, fluorinated lithium borate, fluorinated lithium phosphate, lithium perchlorate, and lithium trifluoromethanesulfonate.

The lithium ion-conductive polymer electrolyte according to the present invention has the foregoing constitution. In other words, the lithium ion-conductive polymer electrolyte according to the present invention comprises an acrylate, methacrylate, vinyl ether or allyl ether thermoplastic polymer containing a crown ether in its side chain through a spacer. The form of the lithium ion-conductive polymer electrolyte according to the present invention may be properly determined by its purpose or the like.

For example, the lithium ion-conductive polymer electrolyte of the present invention, if used as an electrolyte and separator to be interposed between the positive electrode and the negative electrode in a lithium ion battery, may be formed into a sheet before use. The sheet forming can be effected as follows. A 1 to 50 wt% solution of the foregoing polymer is casted into a flat sheet. The solvent is then evaporated away to obtain a sheet. The sheet-like polymer is dipped in a solution of the foregoing lithium salt in an organic solvent (e.g., acetone, tetrahydrofuran, dimethoxyethane, dioxolane, ethylene carbonate, propylene carbonate, acetonitrile, dimethylformamide, γ-butyrolactone, methyl acetate, methyl formate) so that it is impregnated with the lithium salt solution. The organic solvent is then evaporated away. Thus, a sheet-like material having a thickness even of the order of micron can be prepared.

Alternatively, if applied to the positive electrode of lithium ion battery, the foregoing polymer, an active material at a positive electrode, and optionally a crosslinking agent are mixed in a predetermined proportion. The mixture thus obtained is then formed into a sheet which is simultaneously crosslinked. The sheet-like material thus obtained is then dipped in the same lithium salt solution in an organic solvent as above, followed by the evaporation of the organic solvent. In this manner, a positive electrode comprising the foregoing polymer electrolyte and positive electrode material integrated in admixture can be obtained.

Fig. 1 shows an embodiment of the thin lithium ion battery according to the present invention. In Fig. 1, the reference numeral 1 indicates a positive electrode formed from the foregoing polymer electrolyte, the reference numeral 2 indicates a negative electrode made of lithium, lithium alloy or carbon material, the reference numeral 3 indicates a sheet-like separator formed from the foregoing polymer electrolyte, the reference numeral 4 indicates a stainless steel positive electrode collector plate, the reference numeral 5 indicates a stainless steel negative electrode collector plate, and the reference numeral 6 indicates an adhesive layer which seals the positive and negative electrode collector plates in such an arrangement that they are electrically insulated from each other.

In the foregoing lithium ion battery, the separator is composed of the foregoing polymer electrolyte which has been formed into a sheet, and the positive electrode is composed of a formed product containing the foregoing polymer electrolyte. This arrangement makes contributions to the reduction of the thickness of the battery, the enhancement of the workability in battery production and the reliability in battery sealing. This arrangement does not involve a problem of liquid leakage as in liquid electrolyte batteries. Thus, this arrangement is also favorable for safety against heat generation due to excessive current passage and accompanying ignition. Further, since the foregoing polymer electrolyte exhibits an excellent lithium ion conductivity, it provides a primary battery with excellent discharging characteristics or a secondary battery with excellent charging-discharging characteristics.

Where the lithium ion-conductive polymer electrolyte according to the present invention is applied to a lithium ion battery as mentioned above, an electrolytic solution comprising a lithium salt dissolved as an electrolyte in a non-aqueous solvent may be used as necessary in combination with the polymer electrolyte. The non-aqueous solvent used may be any of the foregoing organic solvents such as dimethoxyethane, ethylene carbonate, propylene carbonate and γ-butyrolactone. The lithium salt to be used as an electrolyte may be any of the foregoing lithium salts such as lithium bromide, lithium iodide, lithium thiocyanate, fluorinated lithium borate, fluorinated lithium phosphate, lithium perchlorate, and lithium trifluoromethanesulfonate.

In the present invention, if the lithium ion-conductive polymer electrolyte having the foregoing constitution is applied to a lithium ion battery, it may be used in the following form rather than the foregoing solid electrolyte. In some detail, the foregoing polymer electrolyte may be dissolved in a non-combustible organic solvent such as trifluoropropylene carbonate, perfluoroethylene carbonate, carbon tetrachloride, chloroform, tetrafluoroethane and methylene chloride, to prepare an electrolytic solution. Further, this electrolytic solution may be mixed with the foregoing conventional non-aqueous electrolyte to prepare a flame retardant electrolytic solution mixture which is then used to make up for the loss of lithium ion conductivity. This arrangement can exert an effect of enhancing the safety of the lithium ion battery.

The purpose of the lithium ion-conductive polymer electrolyte according to the present invention is not limited to lithium ion battery. The lithium ion-conductive polymer electrolyte according to the present invention can find wide application in various purposes such as electrolyte for electrochromic display, lithium ion concentration sensor and lithium ion separating membrane.

The present invention will be further described in the following examples, but the present invention should not be construed as being limited thereto. The electrical conductivity of the polymer electrolytes set forth in the following examples were measured according to ordinary complex impedance method.

### EXAMPLE 1

### Synthesis of Main Monomer:

Metallic lithium cut into a size of about 3 mm x 3 mm x 3 mm was used in an amount of 1 mol per mol of 2-(12-crown-4)methylcarbinol. These metallic lithium pieces were then gradually added to a non-aqueous tetrahydrofuran solution of 2-(12-crown-4)methylcarbinol while being cooled. After completion of the addition, the reaction solution was allowed to heat to room temperature where it was then stirred for 30 minutes. The reaction solution was then added dropwise to a 10 wt% tetrahydrofuran solution of 3 mols of 1-tetrahydropyranyloxy-2-(chloroethoxyethoxy)ethane under reflux through a dropping funnel. After the completion of dropwise addition, refluxing continued for 2 hours. The resulting lithium chloride was removed by filtration. Tetrahydrofuran was then removed under reduced pressure.

The resulting crystal was then recrystallized. Tetrahydropyranyl group was removed from the crystal compound according to an ordinary chemical method to obtain 2-(12-crown-4)-methyloxy ethoxyethoxy ethyl alcohol which was then dissolved in 2,500 ml of tetrahydrofuran with 1 mol of triethylamine. To the solution was then added dropwise 1,000 ml of a tetrahydrofuran solution of 1 mol of acryloyl chloride under cooling with ice. After the completion of dropwise addition, the reaction solution was allowed to heat to room temperature where it was then allowed to undergo reaction. The resulting triethylamine hydrochloride salt was removed by filtration. The solvent was then removed under reduced pressure. The resulting residue was dissolved in ether. The solution thus obtained was washed with an alkali and then with water, and then dried. Ether was then removed from the reaction product to obtain the desired main monomer M₁ composed of acryloyloxy ethoxyethoxymethylene-2-(12-crown-4). The yield of the main monomer M₁ was 75% by weight.

### Synthesis of Polymer Electrolyte:

The main monomer M₁ thus obtained and 1 g of acrylonitrile were allowed to undergo copolymerization with ethyl acetate as an organic solvent in the presence of benzoyl peroxide as a polymerization catalyst to prepare a solution of an acrylic polymer containing a crown ether bonded to its side chain through a spacer (polyethylene oxide group).

The polymer solution was casted onto a glass plate, and then dried to obtain a sheet-like material. The sheet-like material was then dipped in a solution of fluorinated lithium borate as a lithium salt in an organic solvent (ethylene carbonate) so that it was impregnated with the solution. The organic solvent was then evaporated away to obtain a polymer electrolyte composed of a flexible sheet having a thickness of 100 µm. The polymer electrolyte thus obtained exhibited an electrical conductivity of 3 x 10⁻³ Scm⁻¹ at 25°C and 2 x 10⁻⁴ Scm⁻¹ at -10°C.

### EXAMPLE 2

A main monomer M₂ composed of acryloyloxyethoxyethoxy methylene-2-(15-crown-5) was prepared in accordance with the method of Example 1. The main monomer M₂ and acrylonitrile were then allowed to undergo copolymerization at a weight ratio of 3 : 1 to prepare a solution of an acrylic polymer containing a crown ether bonded to its side chain through a spacer (polyethylene oxide group). Using the solution thus obtained, a polymer electrolyte was obtained in the same manner as in Example 1. The polymer electrolyte thus obtained exhibited an electrical conductivity of 7 x 10⁻⁴ Scm⁻¹ at 25°C.

### EXAMPLE 3

A main monomer M₃ composed of acryloyloxyethoxyethoxy methylene-2-(18-crown-6) was prepared in accordance with the method of Example 1. The main monomer M₃ and acrylonitrile were then allowed to undergo copolymerization at a weight ratio of 3 : 1 to prepare a solution of an acrylic polymer containing a crown ether bonded to its side chain through a spacer (polyethylene oxide group). Using the solution thus obtained, a polymer electrolyte was obtained in the same manner as in Example 1. The polymer electrolyte thus obtained exhibited an electrical conductivity of 2 x 10⁻⁴ Scm⁻¹ at 25°C.

### EXAMPLE 4

A main monomer M₄ composed of acryloyloxyethoxyethoxy methylene-1-(cyclic pentamethylhexaanisole) was prepared in accordance with the method of Example 1. The main monomer M₄ and acrylonitrile were then allowed to undergo copolymerization at a weight ratio of 3 : 1 to prepare a solution of an acrylic polymer containing a crown ether bonded to its side chain through a spacer (polyethylene oxide group). Using the solution thus obtained, a polymer electrolyte was obtained in the same manner as in Example 1. The polymer electrolyte thus obtained exhibited an electrical conductivity of 8 x 10⁻³ Scm⁻¹ at 25°C and 5 x 10⁻³ Scm⁻¹.

### EXAMPLE 5

The main monomer M₄ obtained in Example 4 and acrylonitrile were then allowed to undergo copolymerization at a weight ratio of 5 : 1 to prepare a solution of an acrylic polymer containing a crown ether bonded to its side chain through a spacer (polyethylene oxide group). Using the solution thus obtained, a polymer electrolyte was obtained in the same manner as in Example 1. The polymer electrolyte thus obtained exhibited an electrical conductivity of 9 x 10⁻³ Scm⁻¹ at 25°C.

### EXAMPLE 6

A main monomer M₅ composed of methacryloyloxyethoxyethoxy methylene-1-(cyclic pentamethylhexaanisole) was prepared in accordance with the method of Example 1. The main monomer M₅ and acrylonitrile were then allowed to undergo copolymerization at a weight ratio of 3 : 1 to prepare a solution of a methacrylic polymer containing a crown ether bonded to its side chain through a spacer (polyethylene oxide group). Using the solution thus obtained, a polymer electrolyte was obtained in the same manner as in Example 1. The polymer electrolyte thus obtained exhibited an electrical conductivity of 6 x 10⁻³ Scm⁻¹ at 25°C.

### EXAMPLE 7

The main monomer M₄ obtained in Example 4 and vinylethoxyethoxyethyl ether were then allowed to undergo copolymerization at a weight ratio of 3 : 1 to prepare a solution of an acrylic polymer containing a crown ether bonded to its side chain through a spacer (polyethylene oxide group). Using the solution thus obtained, a polymer electrolyte was obtained in the same manner as in Example 1. The polymer electrolyte thus obtained exhibited an electrical conductivity of 8 x 10⁻³ Scm⁻¹ at 25°C.

### EXAMPLE 8

The polymer electrolyte obtained in Example 4 was impregnated with a propylene carbonate solution of lithium hexafluoroethanesulfonate. The polymer electrolyte exhibited an electrical conductivity of 1 x 10⁻² Scm⁻¹ at 25°C.

### EXAMPLE 9

A main monomer M₆ composed of acryloyloxyethoxyethoxy methylene-1-(cyclic pentamethylhexathioanisole) was prepared in accordance with the method of Example 1. The main monomer M₆ and acrylonitrile were then allowed to undergo copolymerization at a weight ratio of 3 : 1 to prepare a solution of an acrylic polymer containing a crown ether bonded to its side chain through a spacer (polyethylene oxide group). Using the solution thus obtained, a polymer electrolyte was obtained in the same manner as in Example 1. The polymer electrolyte thus obtained exhibited an electrical conductivity of 9 x 10⁻³ Scm⁻¹ at 25°C and 7 x 10⁻³ Scm⁻¹ at - 10°C.

As mentioned above, the lithium ion-conductive polymer electrolyte according to the present invention comprises an acrylic, methacrylic, vinyl ether or allyl ether thermoplastic polymer containing a crown ether bonded to its side chain through a spacer, and a lithium salt as an electrolyte contained therein. This arrangement can provide a polymer electrolyte which is solid at room temperature, can be formed into a film or the like, and exhibits a good lithium ion conductivity.

Further, the present invention uses the lithium ion-conductive polymer electrolyte as a separator to be interposed between the positive electrode and the negative electrode or as a material constituting the positive electrode. This arrangement contributes to improvement in the reduction of thickness of the battery, the workability in battery production, and the reliability in battery sealing. This arrangement does not involve a problem of liquid leakage as in liquid electrolyte batteries. Thus, this arrangement is also favorable for safety against heat generation due to excessive current passage and accompanying ignition. Further, since this lithium ion battery comprises the foregoing polymer electrolyte, which exhibits an excellent lithium ion conductivity, it can find wide application as a primary battery with excellent discharging characteristics or a secondary battery with excellent charging-discharging characteristics.

While the invention has been described in detail and with reference to specific embodiments thereof, it will be apparent to one skilled in the art that various changes and modifications can be made therein without departing from the spirit and scope thereof.

## Claims

1. A lithium ion-conductive polymer electrolyte, comprising an acrylate, methacrylate, vinyl ether or allyl ether thermoplastic polymer containing a crown ether bonded to its side chain through a spacer, and a lithium salt as a polymer electrolyte contained therein.

2. The lithium ion-conductive polymer electrolyte according to Claim 1, wherein said thermoplastic polymer is a homopolymer or copolymer of an acrylate, methacrylate, vinyl ether or allyl ether monomer containing a crown ether bonded to a terminal of an ester or ether moiety through an alkylene group or (poly)alkylene oxide group, or a copolymer of said monomer and acrylonitrile, acrylic acid esters, methacrylic acid esters, vinyl ethers or allyl ethers.

3. The lithium ion-conductive polymer electrolyte according to claim 1, wherein said spacer comprises a C₁₋₂₀ alkylene group or (poly)alkylene oxide group.

4. The lithium ion-conductive polymer electrolyte according to Claim 1, wherein said crown ether comprises 12-crown-4 (or benzo or dibenzo derivative thereof), 15-crown-5 (or benzo or dibenzo derivative thereof), 18-crown-5 (or benzo or dibenzo derivative thereof), cyclic hexamethylhexaanisole derivative or thioether derivative thereof as a basic skeleton, and has a substituent capable of chemically bonding to said spacer.

5. A lithium ion battery, comprising a lithium ion-conductive polymer electrolyte as claimed in claim 1 used as a separator interposed between a positive electrode and a negative electrode or as a material constituting the positive electrode.

6. The lithium ion battery according to Claim 5, wherein said lithium ion-conductive polymer electrolyte further comprises an electrolytic solution obtained by dissolving a lithium salt in a non-aqueous solvent as an electrolyte.
